# EUROPÄISCHE PATENTSCHRIFT

(11) **EP 3 374 712 B1**
(45) Veröffentlichungstag und Bekanntmachung des Hinweises auf die Patenterteilung: **23.12.2020**
(21) Anmeldenummer: 16728895.0
(22) Anmeldetag: 03.06.2016
(51) Int. Cl.: F24F 11/00, F25B 49/00, F25D 29/00, G01R 19/25, G05B 23/02, H02J 13/00

(54) **VORRICHTUNG UND VERFAHREN ZUR MULTIFUNKTIONSVERNETZUNG**
METHOD AND DEVICE FOR MULTIPURPOSE NETWORKING
PROCÉDÉ ET DISPOSITIF POUR RÉSEAUTAGE À PLUSIEURS USAGE

(30) Priorität: 11.11.2015 DE 102015119493
(43) Veröffentlichungstag der Anmeldung: 19.09.2018
(73) Patentinhaber: EBM-Papst Mulfingen GmbH&CO. KG, 74673 Mulfingen (DE)
(72) Erfinder: HUNDSDÖRFER, Rainer, 74673 Mulfingen (DE); ECCARIUS, Michael, 74673 Mulfingen (DE)
(74) Vertreter: Staeger & Sperling Partnerschaftsgesellschaft mbB
(86) Internationale Anmeldenummer: PCT/EP2016/062662
(87) Internationale Veröffentlichungsnummer: WO 2017/080686

(56) Entgegenhaltungen:
- WO-A1-2008/151630
- DE-A1-102010 033 321
- DE-A1-102012 211 357
- DE-T5-112009 004 987
- DE-U1-202008 009 128
- DE-U1-202012 009 662

## Beschreibung

Die Erfindung betrifft eine Vorrichtung und ein Verfahren zur Multifunktionsvernetzung von energieversorgten Aggregaten.

Aus dem Stand der Technik ist bekannt, dass energieversorgte Aggregate wie beispielsweise Klimaanlagen, Haushaltsgeräte, Kühltheken, Kühlräume oder Kühlhäuser, Kompressoren und -anlagen und insbesondere Aggregate zu Aufbewahrungs- und, oder Anbietungszwecken in Verkaufsräumen auf verschiedene Weisen vernetzt sind.

Mit der Vernetzung werden unterschiedliche Ziele verfolgt. Kühlaggregate, insbesondere Kühlschränke können mit Verbindungen nach extern versehen sein, um multimediale Unterhaltungsfunktionen zu realisieren. Zu diesem Zweck besteht vorzugsweise die Verbindung nach extern aus einer Internetverbindung und der Kühlschrank umfasst einen Kühlschrankkontrollbereich zur Kontrolle wesentlicher Elemente des Kühlschranks, ein Touchpanel zum Bereitstellen von Tastensignalen, die mit dem Betrieb des Kühlschranks selbst zusammenhängen, und von Tastensignalen zur Durchführung einer Kommunikation mit dem Internet gemäß der Auswahl eines Nutzers, eine Fernbedienung zum Bereitstellen der Tastensignale, die mit dem Betrieb des Kühlschranks selbst zusammenhängen, einen Anzeigebereich, der auf einer Außenseite des Kühlschranks angeordnet ist zum Anzeigen von Information, die mit dem Betrieb des Kühlschranks selbst zusammenhängt und von aus dem Internet erhaltener Information als Reaktion auf die Tastensignale von dem Touchpanel und den Tastensignalen von externen Einrichtungen durch das Internet, einen Hauptkontrollbereich zur Durchführung einer bidirektionalen Kommunikation mit dem Kühlschrankkontrollbereich und dem Internet und zur Kontrolle des Anzeigebereichs als Antwort auf die Tastensignale von dem Touchpanel, die Tastensignale als dem Internet und die Tastensignale von der Fernbedienung, einen ausgewählten Kommunikationskontrollbereich zur Verwaltung der bidirektionalen Kommunikation zwischen dem Kühlschrankkontrollbereich und dem Hauptkontrollbereich, und eine Internetverbindungseinrichtung, die zwischen dem Internet und dem Hauptkontrollbereich durch eine ausgewählte Kommunikationsleitung für die bidirektionale Kommunikation zwischen dem Internet und dem Hauptkontrollbereich angeschlossen ist. Die Verbindungseinrichtung kann insbesondere ein Modem zur drahtlosen oder kabelbasierten Verbindung mit dem Internet sein.

Andere energieversorgte Aggregate mit Vernetzung oder Verbindung nach extern können die Überwachung von Funktionsparametern umfassen. Diese Überwachungsfunktionen verfolgen den Zweck Fremdmanipulationen des Aggregates zu detektieren und/oder von der Ferne zu überwachen. In diesen Fällen besteht die Verbindung nach extern in einer meist drahtlos realisierten Datenübertragung an ein Empfangs-, Anzeige- und, oder Fernbedienungsgerät.

Andere Vernetzungskonzepte verfolgen das Ziel, verschiedene Betriebszustände zu überwachen. Bekannt sind in diesem Zusammenhang Geräte, die energieversorgte Aggregate, insbesondere Kühlcontainer durch sensorische Ermittlung der vorliegenden Innenraumtemperatur überwachen und die ermittelten Temperaturwerte mit vorgegebenen oberen und unteren Schwellenwerten vergleichen. Diese Geräte geben Warnsignale ab wenn die ermittelte Ist-Innenraumtemperatur außerhalb des durch die Schwellenwerte definierten zulässigen Temperaturbereiches liegt. Beim Unterschreiten des unteren Temperaturgrenzwertes wird die Stromzufuhr zum Kälteaggregat unterbrochen und beim anschließenden Überschreiten wieder hergestellt. Optional schalten die Schalter bei außerhalb der normalen Betriebstemperaturen liegenden Temperaturen Signallampen ein, die als Teil eines ersten Warnsystems netzabhängig betrieben werden.

Vernetzungen zwischen fernabfragbaren Datenträgern gekoppelt mit Produkten und, oder Gütern bzw. deren Umverpackungen und wenigstens einem vorzugsweise externen Lesegerät, Empfangsgerät oder einer geeigneten elektronischen Einrichtung können zur Analyse und, oder Überwachung bzw. zur Erfassung eines jeweiligen Ist-Zustandes eingesetzt werden. Insbesondere können tiefgefrorene Güter in Gefriergeräten auf diese Weise ihren jeweiligen Zustand, z. B. die Haltbarkeit betreffend, fernüberwacht werden.

Sowohl im Handel und in Verkaufsstätten als auch im Haushalt werden tiefgefrorene Güter, nämlich vorzugsweise Lebensmittel eingelagert, deren Haltbarkeit durch deren Verfallsdaten gekennzeichnet ist. Wichtig ist es, den Überblick über die Verfallsdaten und die noch vorrätigen Mengen der in dem Gefriergerät befindlichen Lebensmittel zu erhalten.

Bei gewerblichen Gefriergeräten, beispielsweise Gefriertruhen, ist es ein besonderes Problem, die Waren nach ihren Verfallsdaten anzuordnen und rechtzeitig Waren zu erkennen, die sich ihrem Verfallsdatum nähern. Um in gewerblichen Gefriergeräten die Güter nach aktuellen Verfallsdaten zu ordnen, müssen aufwendige Inventarlisten angefertigt werden. Weiterhin ist häufig eine Umschichtung der Güter nach Verfallsdaten notwendig. Bei Haushaltsgefriergeräten bereitet es ebenfalls Schwierigkeiten, einen Überblick auch über die Verfallsdaten und noch vorrätigen Mengen der in dem Gefriergerät befindlichen Lebensmittel zu erhalten, weil die Güter üblicherweise in Schubladen mit undurchsichtigen Wänden bevorratet sind. Um einen Überblick über diese Güter zu erhalten, ist es notwendig sämtliche Schubläden zu kontrollieren, was mit einem erheblichen Kälteverlust verbunden ist, da die Gefriergeräte für längere Zeit zur Überprüfung und neuen Einordnung der Güter geöffnet werden müssen.

Zur Lösung dieser Überwachungsaufgaben werden fernabfragbare Datenträger mit den Gütern durch Vernetzung gekoppelt die in der Lage sind, die jeweiligen Produktinformationen temporär oder dauerhaft aufzunehmen und über eine vorzugsweise drahtlose Vernetzung mit wenigstens einem externen Lesegerät, Empfangsgerät oder einer geeigneten elektronischen Einrichtung zu kommunizieren.

Auf diese Weise kann insbesondere das Verfalldatum von Herstellzeitpunkt bis zum Verbrauchszeitpunkt überwacht werden. Sofern dem Datenträger mit der Einlagerung des Gutes geeignete Positionsinformationen innerhalb des Gefriergerätes eingeprägt werden ist diese Vernetzung ebenfalls geeignet, den Lagerort zu erfassen bzw. zu bestimmen. Vielfach werden die Datenträger als Transponderelemente ausgeführt, die durch eine Lesevorrichtung auslesbar sind, sodass sie eine automatische Erfassung der in dem Gefriergerät befindlichen Waren unterstützen und die Daten im Wege einer berührungslosen oder kabelgebundenen Datenübertragung zwischen einer Lesevorrichtung und einem Bediengerät übertragen werden können.

Die Lesevorrichtung wirkt mit Transponderelementen zusammen, wobei jeweils ein Transponderelement einer Ware zugeordnet ist bzw. auf der Ware oder dessen Umverpackung aufgebracht ist. Den Transponderelementen ist jeweils ein Code implementiert, der von der Lesevorrichtung erfassbar ist und die Identifizierung jedes einzelnen Transponderelementes ermöglicht.

Über eine berührungslose oder kabelgebundene Datenübertragung sind zumindest die von der Lesevorrichtung erfassten Codes von dem Gefriergerät zu dem vorzugsweise nach extern vernetzten Bediengeräts übertragbar. Auf diese Weise ist es möglich, dass die in dem Gefriergerät befindlichen Waren auf dem Bediengerät angezeigt werden können. Infolge der berührungslosen Datenübertragung kann das Bediengerät vom Benutzer beispielsweise zum Einkaufen mitgeführt werden, sodass sich der Benutzer im Lebensmittelmarkt direkt einen Überblick über die im Gefriergerät befindlichen Lebensmittel verschaffen kann. Im Haus ermöglicht die berührungslose Datenübertragung eine benutzerfreundliche Bedienung des Bediengeräts unabhängig von dem Standort des Gefriergeräts.

Alternativ können zur berührungslosen Datenübertragung die Daten auch an einer Docking-Station auf das Bediengerät übertragen, d. h. aktualisiert werden. Das Bediengerät ist vorzugsweise tragbar.

Vernetzungen von energieversorgten Aggregaten nach extern können auch zu Wartungs- und Diagnosezwecken eingesetzt werden. Beispielsweise im Bereich von Klimaanlagen können Diagnosesysteme aufweisend verschiedene Sensoren und ein Datenaquisitionsalgorithmus zur Aufnahme unterschiedlicher Messwerte realisiert werden.

Der übliche Aufbau einer Klimaanlage als ein Unterfall von energieversorgten Aggregaten umfasst einen Verdichter, der Kältemittelgas verdichtet und einem Kondensator zuführt, in dem das verdichtete Gas durch thermodynamische Prozesse in eine Flüssigkeit überführt wird. Der Kondensator verfügt in der Regel über ein Sichtglas, das eine visuelle Beobachtung des Füllstandes des Kältemittels in der Anlage während des Betriebs ermöglicht. Die Anlage verfügt über einen Speicher zum Speichern flüssigen Kältemittels auch unter Bedingungen großer Lastschwankungen und weist einen Hochdruckfilter und ein Trockenmittel zum Auffangen und Halten von Feuchtigkeit oder Feststoffpartikeln auf, die in der Anlage vorhanden sein können. Das Kältemittel gelangt durch ein Expansionsventil zu einem Verdampfer, der das Kältemittel verdampft und die freiwerdende Kälte zur Kühlung nutzbar macht. Vom Verdampfer kehrt das Kältemittel zum Verdichter zurück, um den oben beschriebenen Kühlzyklus erneut zu starten und den Kühlkreislauf aufzubauen. Die zum Betrieb der Anlage erforderliche Antriebsenergie dieser thermodynamischen Kreisprozessanlage wird üblicherweise durch einen Elektromotor realisiert.

Die eingesetzten Sensoren überwachen beispielsweise die Anlagendrücke innerhalb der kälteerzeugenden Komponenten und/oder verschiedene Temperaturen in der Anlage sowie Betriebsparameter für den die Anlage antreibenden Motor. Durch Integration zusätzlicher Sensoren und insbesondere von Motorbetriebssensoren kann das Datenakquisitionssystem bessere Diagnoseergebnisse für die Klimaanlage liefern. Das Datenakquisitionssystem ist üblicherweise mit einem Handrechner drahtlos oder drahtgebunden vernetzt und bildet auf diese Weise ein Diagnosewerkzeug für einen Wartungstechniker. Es sind Kosteneinsparungen dadurch möglich, dass Klimaanlagen beispielsweise in Wohngebäuden, Fahrzeugen oder Gebäudekomplexen mit einem Diagnosesystem überwacht oder überprüft werden können, ohne jede einzelne Anlage mit unabhängigen Sensoren und unabhängiger Elektronik auszustatten.

Ziel eines solchen vernetzten Diagnosesystems ist es, den Wartungstechniker bei der effizienten Wartung der Klimaanlage zu unterstützen, wenn eine Störung, eine Fehlfunktion oder ein beliebig geartetes Problem vorliegt.

Diagnosewerkzeuge dieser Gattung weisen vorzugsweise eine drahtlose Internetverbindung zu einem Leitrechner auf, der die Wartungsinformationen zu den verschiedenen zu diagnostizierenden Anlagen enthält. Auf diese Weise kann der Handrechner ständig mit neuen Informationen aktualisiert werden und muss nicht Dateien zu jeder Anlage führen. Wenn der Techniker auf eine Anlage trifft, die in seinem Handrechner nicht abgespeichert ist, kann eine drahtlose Internetverbindung zum Leitrechner die fehlenden Informationen auffinden. In diesem Fall arbeitet das Diagnosesystem vergleichbar mit einer Datenweiche.

Auch können Vernetzungen von energieversorgten Aggregaten innerhalb von Verbundanlagen realisiert sein. Bekannt sind Steuerungsverfahren zur Leistungsregulierung einer Mehrzahl solcher Aggregate, beispielsweise von Verdichtern. Ziel ist dabei, die Gesamtleistung durch zielgerichtetes Ansteuern der einzelnen Verdichter durch deren jeweilige Leistungsabgabe zu beeinflussen.

Eine Verbundanlage mit mehreren parallel zueinander geschalteten Verdichtern dient in einem Kühlkreis zur bedarfsabhängigen Regulierung der Kälteleistung. Hierfür wird in Abhängigkeit einer benötigten Kälteleistung ein gewünschter Wert (Sollwert) der Gesamtleistung der Verbundanlage ermittelt. Eine Steuereinrichtung erzeugt entsprechende Steuersignale und übermittelt diese an die einzelnen Verdichter der Verbundanlage. Bei einer derartigen Verbundanlage können somit einzelne Verdichter wahlweise abgeschaltet oder zugeschaltet werden. Für zumindest einige (vorzugsweise für sämtliche) der Verdichter können entsprechend den empfangenen Steuersignalen verschiedene Leistungswerte eingestellt werden, beispielsweise durch Abschalten einzelner Zylinderbänke, um unterschiedliche Werte der Gesamtleistung der Verbundanlage einzustellen und somit die bereitgestellte Kälteleistung an die Kälteanforderung anzupassen.

Durch die Möglichkeit wenigstens einen dieser Verdichter mit Bezug auf die abzugebende Gesamtleistung anzusteuern kann der Gesamtwirkungsgrad günstig beeinflusst werden dadurch, dass die einzustellenden Einzelleistungswerte den Bereich anstreben, der dem jeweiligen maximalen Wirkungsgrad entspricht.

Steuerungsverfahren innerhalb dieser Vernetzungsfunktion nutzen die Tatsache, dass jeder Verdichter für verschiedene eingestellte Leistungswerte einen unterschiedlichen Wirkungsgrad besitzt. Es kann bei ungünstigen Kombinationen von Leistungswerten mehrerer zusammengeschalteter Verdichter ein vergleichsweise schlechter Gesamtwirkungsgrad der Verbundanlage vorliegen. Indem jedoch für das Auswählen der Anzahl der aktiven Verdichter und für das Einstellen des jeweiligen Leistungswertes der aktiven Verdichter der jeweilige Einzelwirkungsgrad des Verdichters berücksichtigt wird, kann vermieden werden, dass während einer Änderung der Gesamtleistung der Verbundanlage der Gesamtwirkungsgrad der Verbundanlage unerwünscht stark abfällt. Insbesondere können das Einstellen der Anzahl der aktiven Verdichter und das Einstellen der jeweiligen Leistungswerte der aktiven Verdichter entsprechend angepasst werden oder aufgrund der Effizienzbetrachtung zu den einzelnen Verdichtern wird auf das Einstellen bestimmter Werte der Gesamtleistung der Verbundanlage verzichtet.

Um den jeweiligen Wirkungsgrad der einzelnen Verdichter auf einfache Weise erfassen und quantitativ zu berücksichtigen, können den verschiedenen Leistungswerten der einzelnen Verdichter unterschiedliche Effizienzwerte zugeordnet sein, wobei diese Effizienzwerte der einzelnen Verdichter gemeinsam einen Gesamteffizienzwert der Verbundanlage ergeben. Bei Verwendung eines derartigen Modells wird für das Einstellen von Zwischenwerten der Gesamtleistung der Verbundanlage (d. h. von Werten, die oberhalb der minimalen Gesamtleistung und unterhalb der maximal möglichen Gesamtleistung der Verbundanlage liegen) insbesondere stets diejenige Kombination von Anzahl der aktiven Verdichter und Leistungswerten der aktiven Verdichter eingestellt, die dem besten Gesamteffizienzwert der Verbundanlage entspricht. Durch Berücksichtigung eines derartigen Gesamteffizienzwerts zumindest für sämtliche Zwischenwerte der möglichen Gesamtleistung der Verbundanlage kann also auf einfache Weise sichergestellt werden, dass die Verbundanlage bzw. der entsprechende Kältekreis stets mit dem bestmöglichen Gesamtwirkungsgrad betrieben wird.

So beschäftigt sich die Druckschrift DE 102010033321 A1 im Rahmen einer Verbundanlage mit mehreren parallel zueinander geschalteten Verdichtern in einem Kühlkreis zur bedarfsabhängigen Regulierung der Kälteleistung. Hierfür wird in Abhängigkeit von einer benötigten Kälteleistung ein gewünschter Wert (Sollwert) der Gesamtleistung der Verbundanlage ermittelt. Eine Steuereinrichtung erzeugt entsprechende Steuersignale und übermittelt diese an die einzelnen Verdichter der Verbundanlage. Bei einer derartigen Verbundanlage können somit einzelne Verdichter wahlweise abgeschaltet oder zugeschaltet werden. Für zumindest einige (vorzugsweise für sämtliche) der Verdichter können entsprechend der empfangenen Steuersignale verschiedene Leistungswerte eingestellt werden, beispielsweise durch Abschalten einzelner Zylinderbänke, um unterschiedliche Werte der Gesamtleistung der Verbundanlage einzustellen und somit die bereitgestellte Kälteleistung an die Kälteanforderung anzupassen.

Aus der DE 28 16 142 A1 ist beispielsweise eine Leistungsregulierung in Stufen von 25%, 50%, 75% und 100% bekannt. Aus der DE 101 41 807 A1 ist es ferner bekannt, durch Verwendung eines Frequenzumrichters eine stufenlose Leistungsregulierung vorzunehmen.

Ein Nachteil an bekannten Verfahren zur bedarfsgerechten Leistungsregulierung einer Verbundanlage besteht darin, dass dem unterschiedlichen Wirkungsgrad der verschiedenen Leistungsbereiche der einzelnen Verdichter nicht hinreichend Rechnung getragen wird. Für manche Werte der erzielten Gesamtleistung der Verbundanlage ergibt sich somit eine unerwünscht schlechte Effizienz (COP, coefficient of performance).

Die DE 102010033321 A1 schlägt hierzu vor, dass das Einstellen der Gesamtleistung der Verbundanlage unter Berücksichtigung des jeweiligen Wirkungsgrads der einzelnen Verdichter für die verschiedenen Leistungswerte erfolgt. Hierzu liegt die Erkenntnis zugrunde, dass jeder Verdichter für verschiedene eingestellte Leistungswerte einen unterschiedlichen Wirkungsgrad besitzt, wobei für ungünstige Kombinationen von Leistungswerten mehrerer zusammengeschalteter Verdichter ein vergleichsweise schlechter Gesamtwirkungsgrad der Verbundanlage resultiert. Indem jedoch für das Auswählen der Anzahl der aktiven Verdichter und für das Einstellen des jeweiligen Leistungswerts der aktiven Verdichter der jeweilige Einzelwirkungsgrad der Verdichter berücksichtigt wird, kann vermieden werden, dass während einer Änderung der Gesamtleistung der Verbundanlage der Gesamtwirkungsgrad der Verbundanlage unerwünscht stark abfällt. Insbesondere können das Einstellen der Anzahl der aktiven Verdichter und das Einstellen der jeweiligen Leistungswerte der aktiven Verdichter entsprechend angepasst werden, oder aufgrund der Effizienzbetrachtung zu den einzelnen Verdichtern wird auf das Einstellen bestimmter Werte der Gesamtleistung der Verbundanlage verzichtet.

Aus der DE 102012211357 A1 ist ferner ein Verfahren zum Steuern eines Kühlmöbelsystems bekannt, welches eine Vielzahl von Kühlmöbeln, insbesondere von Verkaufskühlmöbeln für den Lebensmittelhandel umfasst, wobei jedem Kühlmöbel eine Kälteerzeugungseinrichtung und eine Regeleinrichtung zum Regeln der Kälteerzeugungseinrichtung zugeordnet ist, wobei in einem Normalbetrieb der Kühlmöbel die jeweilige Regeleinrichtung die zugeordnete Kälteerzeugungseinrichtung zumindest auf Grundlage eines Unterschied zwischen einem einstellbaren Sollwert und wenigstens einem gemessenen Istwert regelt und wobei für einen Kältespeicherbetrieb der Kühlmöbel zumindest die folgenden Schritte durchgeführt werden: Erzeugen von Kältespeicheranforderungssignalen für die Kühlmöbel auf der Grundlage von zeitbezogenen Energiepreisinformationen, Erzeugen von Stellsignalen zum Einstellen einer die Kälteleistung der jeweiligen Kälteerzeugungseinrichtung beeinflussenden Stellgröße zumindest auf der Grundlage der Kältespeicheranforderungssignale, und Regeln einer jeden Kälteerzeugungseinrichtung zumindest auf der Grundlage der gemäß den Stellsignalen eingestellten Stellgröße.

Bei den Kühlmöbeln kann es sich sowohl um Tiefkühlmöbel zum Lagern von tiefgekühlter Ware bei einer tieferen Kühltemperatur (ca. -18°C) als auch um Normalkühlmöbel zum Lagern von normal gekühlter Ware bei einer höheren Kühltemperatur (sogenannte Pluskühlung bei ca. +4°C) handeln. In beiden Fällen ist eine maximal zulässige Kühlguttemperatur gesetzlich vorgeschrieben, welche der Verderblichkeit des Kühlguts Rechnung trägt, und die Regelung der jeweiligen Kälteerzeugungseinrichtung ist hierauf ausgelegt. Die Kühlmöbel können beispielsweise als Kühltruhen oder Kühlregale ausgebildet sein und wahlweise Abdeckungen bzw. Türen aufweisen. Ferner können unter Kühlmöbeln auch kleinere Kühlräume oder Kühlzellen verstanden werden, die lediglich der Zwischenlagerung von Kühlgut in Lebensmittelmärkten dienen und daher für den Endverbraucher in der Regel nicht zugänglich sind. Betreffend dem Aufbau von Systemnetzwerken mit Geräten und Aggregaten sind unterschiedliche technische Standards bekannt. Solche Plattformen sind vorzugsweise sowie Elektroniksoftware für Messparameter, Überwachungs- /Kalibriersysteme und Servicesysteme ausgestattet oder mit integrierter Feldbus-Ethernettechnologie, EtherNet/IP, Ethernet TCP/IP, 2-Draht Ethernet, EtherTalk, sowie anderen ähnlichen und/oder angepassten Feldbusprotokollen, insbesondere HART-IP, HART-4mA, Profibus DP, Profibus PA, FF, I/O-Link, USB, für explosionsgefährdete (EX) und/oder nichtexplosionsgefährdete (Nicht-EX) Umgebungen, - mit direkter Anschlussmöglichkeit an speicherprogrammierbare Steuerungen (SPS) und/oder Ein/Ausgabeeinheiten (I/O's oder remote I/O's) der am Markt eingeführten Systemhersteller über Festkabelverbindung als 2-Draht und/ oder mehradrige Drahtverbindung, Kupfer- und/oder Lichtwellenleiterverbindung realisiert.

Ferner sind drahtlose Lösungen, sogenannte Wirelessverbindungen bekannt, insbesondere Bluetooth, WLAN, WirelessHART, Zigbee, mit direkter Anschlussmöglichkeit an PC's z. B. mittels USB und/oder mittels Interface oder, USB-Modem für sensorseitiges Ethernet und anderen sensorseitigen Feldbusen, z. B. Profibus oder Profinet oder I/O-Link oder FF, oder HART-IP, oder HART 4 mA und speziell angepasste Feldbusse, wobei diese bedienbar mit standardisierten Bedienoberflächen, wie insbesondere PACTware-FDT/DTM, und/oder üblichen Feldkommunikatoren, z. B. Emerson 475 Field Communicator für FF und HART oder andere der am Markt eingeführten Systemhersteller oder App's oder Anwendungssoftware für mobile Betriebssysteme, wie dem des iPhone und/oder PC's, Laptop mit unterschiedlichen Betriebsystemen (z. B. Apple, Windows, Linux und dgl.)

Betreffend der drahtlosen Funknetzwerke sind neben ZigBee noch iFlow und Frigolink bekannt. ZigBee ist eine Netzwerk-Spezifikation, welche ein Netzwerk für drahtlose Funknetzwerke beschreibt. ZigBee baut auf dem technischen Standard IEEE 802.15.4 auf und erweitert dessen Funktionalität insbesondere um die Möglichkeit des Routings und des sicheren Schlüsselaustausches. Im IEEE 802.15.4 Standard sind grundsätzlich zwar die PHY-Schicht und die MAC-Schicht definiert. ZigBee erweitert diesen Protokollstapel um die Schichten NWK und APL, wobei zu beachten ist, dass es sich bei ZigBee um ein Framework handelt und eine Anwendung in die APL-Schicht eingebettet wird. Daher sind die Einsatzmöglichkeiten von ZigBee vielfältig, z. B. in der Gebäude-Automation, für Steuerungsanlagen, somit auch für die Steuerung von enegiebetriebenen Aggregaten und für alle Arten von Sensormessungen.

Frigolink ist eine Plattform für die Automatisierung in der Industrie und im Supermarkt. Wenige der verschiedenen Module enthalten jeweils eine Reihe von Funktionen und ermöglichen viele Systemlösungen.
Die dazu verwendete Software ist so konfiguriert, dass diese den Hardware-Aufwand zu reduzieren versucht. Die einzelnen Funktionen sind bei Frigolink nicht programmiert, sondern in der Software als Parameter angelegt. Dies erleichtert die Wartung und Überprüfung der Funktionen, da sie über die Parameter direkt angesteuert werden und nicht im Softwarecode aufwendig identifiziert werden müssen. Frigolink-Lösungen werden bereits für Kühlstellen, Verbundanlagen, Kälteträger- und Wärmerückgewinnungsanlagen, Heizungs- und Lüftungsanlagen und zur Beleuchtungssteuerung eingesetzt.

Die zuvor genannten Lösungen weisen allerdings einzelne oder mehrere der folgenden Nachteile auf.

Die Lösungen zielen im Wesentlichen auf die Handhabbarkeit und Datenkommunikation als solche ab, bieten aber keine spezifischen Lösungen zur Erzielung aktueller Umwelt- und Energieziele. Es besteht eine zunehmende Nachfrage nach einer Reduzierung, Verbesserung und Realisierung von Energieeinsparungen. Diese Energieeinsparung geht einher mit dem Bedürfnis nach Effizienzverbesserungen.

Die in der aktuellen Technik realisierten Energieeffizienzsteigerungen umfassen üblicherweise nur die Energiebilanzbetrachtung eines energieversorgten Aggregates oder einer lokal installierten Aggregatgruppe.

Eine weitere ungelöste Aufgabe liegt darin, dass Insellösungen mit Inhalten zur lokalen Energieeinsparung der beteiligten Einzelaggregaten das Potential zur Energieeffizienz nur unzureichend nutzen.

Weitere Vorrichtungen und Verfahren zur Multifunktionsvernetzung sind aus den Dokumenten DE202012009662, WO2008/151630, DE202008009128U und DE112009004987T bekannt.

Die Aufgabe der vorliegenden Erfindung besteht demnach darin, vorbesagte Nachteile zu überwinden und ein Verfahren und eine Vorrichtung zur Multifunktionsvernetzung von energieversorgten Aggregaten bereitzustellen, welche energieoptimiert und effizient, insbesondere gesteuert von einem externen Ort, betrieben werden kann.

Diese Aufgabe wird gelöst mit einer Vorrichtung zur Multifunktionsvernetzung von energieversorgten Aggregaten mit den Merkmalen von Anspruch 1, sowie einem Verfahren mit den Merkmalen von Anspruch 7.

Ein Grundgedanke der vorliegenden Erfindung liegt in der systemintegrierten Implementierung einer drahtlosen und/oder drahtgebundenen Steuerungs-, Regelungs-, Paramtererfassungseinrichtung mit der Möglichkeit eines interaktiven, ein- oder bidirektional Datenaustauschs und/oder der Übermittlung von Steuer- und/oder Regelungssignalen in zentraler oder dezentraler Form. Erfindungsgemäß wird daher eine Vorrichtung zur Multifunktionsvernetzung von energieversorgten Aggregaten vorgeschlagen, die ausgebildet ist zum energieeffizienten und fernüberwachbaren Betreiben von einzelnen oder in einer Gruppe oder Gruppen in einem Netzwerk zusammengefügten Aggregaten oder ganzen Verbundanlagen von energieversorgten Aggregaten mit einer drahtlosen und/oder drahtgebundenen Erfassungseinrichtung zum Erfassen von aktuellen und/oder zeitintervallbezogenen Energieverbrauchsdaten und/oder Leistungsdaten der im Netzwerk eingebundenen energieversorgten Aggregaten, die ausgebildet ist, einen interaktiven, ein- oder bidirektional Datenaustausch mit einzelnen oder allen der energieversorgten Aggregaten vorzunehmen sowie einer Steuerungseinrichtung zur Übermittlung von Steuer- und/oder Regelungssignalen, wobei die Steuerungseinrichtung mit einem Datenverarbeitungsmodul ausgebildet ist, welches aus den, von der Erfassungseinrichtung erfassten Energieverbrauchsdaten und/oder Leistungsdaten entsprechende Steuersignale, zur Modifikation wenigstens eines energierelevanten Betriebszustandes wenigstens eines oder aller der energieversorgten Aggregaten generiert, so dass der Energieverbrauch des oder der energieversorgten Aggregaten zu einem Zeitpunkt oder über ein definiertes Zeitintervall abnimmt.

Besonders vorteilhaft lässt sich die Erfindung bei energieversorgten Aggregate in der Kühltechnik einsetzten und zwar für Kühlaggregate, lufttechnische Anlagen, Trockner, Kompressoranlagen, Kühltheken, Kühlhäuser und/oder deren Einrichtungen.

Weiter vorteilhaft ist es, wenn die energieversorgten Aggregate mit einer Zentralsteuerung und/oder wenigstens einer lokalen Steuerung, vorzugsweise auch untereinander vernetzt sind.

In einer vorteilhaften Ausgestaltung der Erfindung ist vorgesehen, dass die Vorrichtung ferner einer Anzeigevorrichtung und/oder eine Eingabevorrichtung zum manuellen und/oder automatisierten Eingeben und/oder Ein- und Auslesen von Parametern, vorzugsweise von betriebsbezogenen Parametern und/oder energieverbrauchsbezogenen Parametern aufweist.

Ferner ist es erfindungsgemäß von Vorteil, wenn die Erfassungseinrichtung zum Erfassen von Daten dazu ausgebildet ist die aktuelle Kühllast sowie einen Energiebedarfsparameter entsprechend der gerade aktuell zu kühlenden Kühllast zu ermitteln und insbesondere eine detektierte Temperaturschwankungen innerhalb von Kühleinrichtungen durch Datenvergleich mit hinterlegten Soll-Betriebsdaten dahingehend interpretieren kann, ob die Temperaturabweichung durch einen Beladungsvorgang mit einer zusätzlichen Kühllast oder einen energieineffizienten Betrieb oder eine Betriebsstörung oder eine andere äußere Einflussgröße, wie z. B. die Außentemperatur verursacht wurde.

In einer vorteilhaften Ausgestaltung der Erfindung ist vorgesehen, dass die Erfassungseinrichtung ausgebildet ist, Betriebszustände mit Energierelevanz, eine Soll/Ist-Temperatur, einen Motorparameter, einen Druckparameter, ein zu förderndes Luststromvolumina oder andere Betriebsparameter, wie Beladungs- und, oder Belastungszustände durch den zu kühlenden Inhalt und deren Verpackungen zu erfassen.

Erfindungsgemäß ist es vorgesehen, dass die Erfassungseinrichtung ausgebildet ist, energieverbrauchsrelevante Änderungen zu erfassen und bestimmungsgemäße energieverbrauchsrelevante Systemeingriffe, wie die Beladung oder die Entnahme von zu kühlenden Produkten, das damit verbundene Öffnen/Schließen von Kühleinrichtungen oder schwankende Umgebungstemperaturen automatisch von energieverbrauchsrelevante Störungen, wie Undichtigkeiten, Defekte oder den Betrieb an einem ungünstigen Betriebspunkt zu unterscheiden.

Erfindungsgemäß ist es vorgesehen, dass die von der die Erfassungseinrichtung erfassten Daten/Informationen, mit welchen von extern behebbare energieverbrauchsrelevante Betriebsstörungen detektiert werden, von der Steuerungseinrichtung so in Steuersignale für die Aggregate gewandelt werden, dass die von extern zu behebende I energieverbrauchsrelevante Betriebsstörungen aufgrund der Steuerungsbefehle beseitigt werden.

Ein weiterer Aspekt der Erfindung betrifft ein Verfahren zur Multifunktionsvernetzung von energieversorgten Aggregaten mit einer Vorrichtung zur Multifinktionsvernetzung nach Anspruch 1, ausgebildet zum energieeffizienten und fernüberwachten Betrieb von einzelnen oder in Gruppen in einem Netzwerk zusammengefügten Aggregaten oder ganzen Verbundanlagen von energieversorgten Aggregaten, mit den folgenden Schritten:
a) drahtlose und/oder drahtgebundene Erfassung von aktuellen und/oder zeitintervallbezogenen Energieverbrauchsdaten und/oder Leistungsdaten der im Netzwerk eingebundenen energieversorgten Aggregaten durch eine Erfassungseinrichtung;
b) Übergabe der erfassten Daten an eine Steuerungseinrichtung;
c) Übermittlung von Steuer- und/oder Regelungssignalen durch die Steuerungseinrichtung an wenigstens eines der Aggregate, wobei die Steuerungseinrichtung mit einem Datenverarbeitungsmodul ausgebildet ist, welche aus den, von der Erfassungseinrichtung erfassten Energieverbrauchsdaten und/oder Leistungsdaten entsprechende Steuersignale generiert;
d) Modifikation wenigstens eines energierelevanten Betriebszustandes wenigstens eines oder aller der energieversorgten Aggregaten, so dass der Energieverbrauch des oder der energieversorgten Aggregaten zu einem Zeitpunkt oder über ein definiertes Zeitintervall abnimmt, wobei
(e) die Erfassungseinrichtung (10) ausgebildet ist, energieverbrauchsrelevante Änderungen zu erfassen und bestimmungsgemäße energieverbrauchsrelevante Systemeingriffe, wie die Beladung oder die Entnahme von zu kühlenden Produkten, das damit verbundene Öffnen/Schließen von Kühleinrichtungen oder schwankende Umgebungstemperaturen automatisch von energieverbrauchsrelevante Störungen, wie Undichtigkeiten, Defekte oder den Betrieb an einem ungünstigen Betriebspunkt zu unterscheiden, wobei
(f) die von der die Erfassungseinrichtung erfassten Daten/Informationen, mit welchen von extern behebbaren energieverbrauchsrelevante Betriebsstörungen detektiert werden, von der Steuerungseinrichtung (20) so in Steuersignale (S) für die Aggregate (A) gewandelt werden, dass die von extern zu behebende energieverbrauchsrelevante Betriebsstörungen aufgrund der Steuerungsbefehle behoben werden.

Mit einer erfindungsgemäßen Multifunktionsvernetzung der Aggregate lassen sich unter anderem folgende technische Aufgaben realisieren:
- Fernüberwachung und/oder Fernwartungskonzept zur Erfassung von energieverbrauchsrelevanten Funktionen, Betriebszuständen, Störungen;
- Erfassung von Temperaturschwankungen innerhalb von Kühleinrichtungen, z. B. durch Befüllung mit neuem (noch nicht gekühltem) Inhalt wie Getränken, Lebensmitteln ect.;
- Beladungs- und, oder Belastungszustände durch den zu kühlenden Inhalt und deren Verpackungen;
- Störungen mit Energierelevanz: z.B. undichte, defekte Türdichtungen von Kühltheken, Energienetzschwankungen (Instabilität, ungleiche Energieeerzeugung z.B. durch Photovoltaik, Wasserkraft, Netzbelastungen durch Belastungsspitzen ect.).

Ferner können die erfassten Daten/Informationen wie folgt verwendet werden, wobei das nur Beispielverfahrensschritte sind, die nicht ein Teil der vorliegenden Erfindung sind. Die vorliegende Erfindung ist in den unabhängigen Ansprüchen 1 und 7 offenbart.
- Erfassen von Betriebsstörungen mit Energieaufnahmerelevanz;
- Störungsbeseitigungsmaßnahmen von extern vorzunehmen;
- Schwankungen der Energieaufnahme auszugleichen durch z. B. Fernwartung, Reparatur vor Ort, Warnhinweise geben, Energieverteilung zwischen den multifunktionsvernetzten Aggregaten, Initiierung von Wartungsmaßnahmen;
- Steuerung der jeweiligen Einzelaggregate zur Glättung, Nivellierung, Anpassung der Gesamtenergieaufnahme einer Mehrzahl und, oder einer Gruppe und, oder die Gesamtheit aller vernetzten Aggregate, dazu Steuerung von energieaufnahmerelevanten Parametern: Motordrehzahlen, verschiedene Betriebsmitteldrücke, Ventilatordrehzahlen, Luftförderleistungen, Motorendrehmomente, Luftvolumenströme, Filterleistungen z. B. in Reinraumanlagen;
- Toleranzen und Bandbreiten der möglichen Sollparameter der vernetzten Aggregate (Soll-Temperaturtoleranzband in Kühleinrichtungen, Motoren-Drehzahlbereiche, Druckbereiche von Kompressoren usw.) nutzen zum Ausgleich von Energieaufnahmemaximas, Netzschwankungen ect.
- Interaktionen einzuleiten zwischen einer Mehrzahl und, oder einer Gruppe und, oder die Gesamtheit aller vernetzten Aggregate oder deren Lokalelektroniken sodass die Gesamtenergieaufnahme entweder gemittelt und, oder reduziert wird, dabei die Betriebsparameterbandbreiten nutzen, mögliche Betriebszeitenunterbrechungen realisieren und überwachen, zu- oder abschalten zusätzlicher Energiequellen wie z.B. Windkraft, Wasserkraft, Akkumulatoren, Photovoltaik ect.;
- Steuerung eines oder einer Mehrzahl von Aggregaten hinsichtlich deren Energieaufnahme in günstige Zeitpunkte die beispielsweise in schwach belasteten Netzzeiträumen vorliegen (elektrische Energie: Nachtzeiten) oder bei hohem Energieangebot (Photovoltaik: wenn Sonneneinstrahlung vorliegt) oder deren Leistungsrücknahme bei starker Netzbelastung (z.B. lokale Großveranstaltungen, Pausenzeiten bei Fernsehsendungen mit hoher Einschaltquote usw.).

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.
- Fig. 1: eine schematische Ansicht eines Systemdiagramms einer erfindungsgemäßen Vorrichtung und
- Fig. 2: eine weitere schematische Ansicht eines Systemdiagramms einer erfindungsgemäßen Vorrichtung.

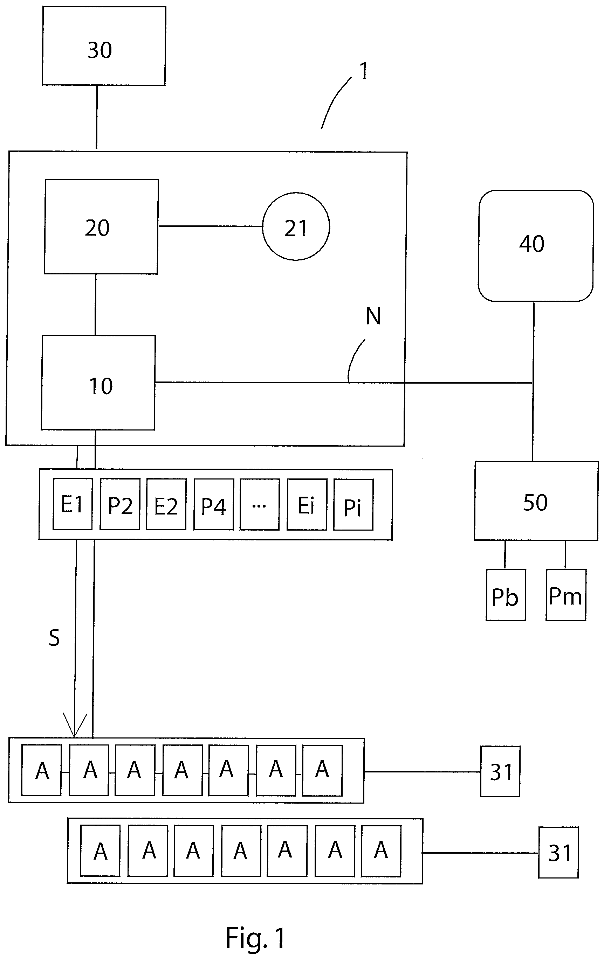

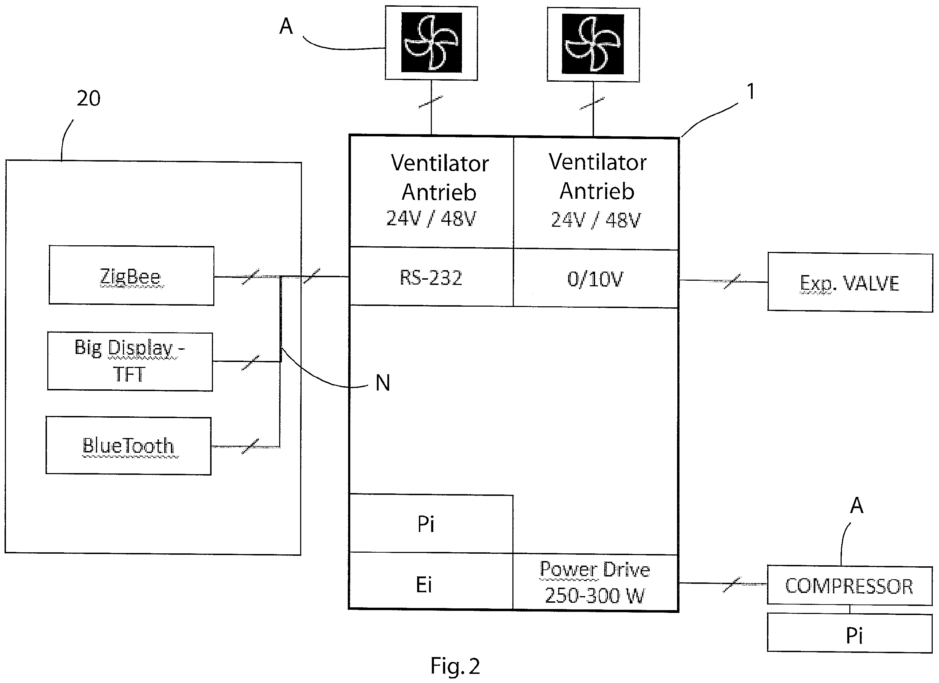

Im Folgenden wird die Erfindung anhand von Ausführungsbeispielen mit Bezug auf die Figuren 1 und 2 näher beschrieben, wobei gleiche Bezugszeichen auf gleiche strukturelle und/oder funktionale Merkmale hinweisen.

In der Fig. 1 ist eine schematische Ansicht eines Systemdiagramms einer erfindungsgemäßen Vorrichtung 1 gezeigt. Die Vorrichtung 1 ist eine Vorrichtung zur Multifunktionsvernetzung von energieversorgten Aggregaten A, wovon zwei zu Gruppen zusammengefasste vernetzte Aggregaten A dargestellt sind. Diese sind in einem Netzwerk N zusammengefügten, so dass eine drahtlose und/oder drahtgebundene Kommunikation untereinander und mit der Zentralsteuerung 30, der Steuerungseinrichtung 20 und der lokalen Steuerung 31 möglich ist.

Ferner ist eine drahtlose und/oder drahtgebundenen Erfassungseinrichtung 10 zum Erfassen von aktuellen und/oder zeitintervallbezogenen Energieverbrauchsdaten Ei und/oder Leistungsdaten Pi der im Netzwerk N eingebundenen energieversorgten Aggregaten A, die ausgebildet ist einen interaktiven, ein- oder bidirektional Datenaustausch mit einzelnen oder allen der energieversorgten Aggregaten A vorzunehmen.

Ferner ist eine Steuerungseinrichtung 20 vorgesehen zur Übermittlung von Steuer- und/oder Regelungssignalen S, wobei die Steuerungseinrichtung 20 mit einem Datenverarbeitungsmodul 21 ausgebildet ist, welche aus den, von der Erfassungseinrichtung 10 erfassten Energieverbrauchsdaten Ei und/oder Leistungsdaten Pi entsprechende Steuersignale S generiert, zur Modifikation wenigstens eines energierelevanten Betriebszustandes wenigstens eines oder aller der energieversorgten Aggregaten A, so dass der Energieverbrauch des oder der energieversorgten Aggregaten A zu bzw. unmittelbar nach dem Erfassungszeitpunkt oder über ein definiertes Zeitintervall abnimmt bzw. reduziert wird.

Erfindungsgemäß ist die Erfassungseinrichtung (10) ausgebildet, energieverbrauchsrelevante Änderungen zu erfassen und bestimmungsgemäße energieverbrauchsrelevante Systemeingriffe, wie die Beladung oder die Entnahme von zu kühlenden Produkten, das damit verbundene Öffnen/Schließen von Kühleinrichtungen oder schwankende Umgebungstemperaturen automatisch von energieverbrauchsrelevante Störungen, wie Undichtigkeiten, Defekte oder den Betrieb an einem ungünstigen Betriebspunkt zu unterscheiden. Erfindungsgemäß werden die von der Erfassungseinrichtung erfassten Daten/Informationen, mit welchen von extern behebbaren energieverbrauchsrelevante Betriebsstörungen detektiert werden, von der Steuerungseinrichtung (20) so in Steuersignale (S) für die Aggregate (A) gewandelt, dass die von extern zu behebenden energieverbrauchsrelevanten Betriebsstörungen aufgrund der Steuerungsbefehle behoben werden.

Die energieversorgten Aggregate A, sind wie in Figur 2 beispielhaft dargestellt z. B. Ventilatoren. Die vorliegende Vorrichtung 1 zur Multifunktionsvernetzung ist ferner mit einer Zentralsteuerung 30 und je Gruppe der Aggregate A mit einer lokalen Steuerung 31 ausgestattet, um von dort die gesamte Steuerung und Regelung vornehmen zu können.

Ferner ist eine Anzeigevorrichtung 40, eine Eingabevorrichtung 50 zum manuellen oder automatisierten Eingeben oder Ein- und Auslesen von Parametern, vorzugsweise von betriebsbezogenen Parametern Pb und/oder energieverbrauchsbezogenen Parametern Pm vorgesehen.

In Fig. 2 ist eine weitere schematische Ansicht eines Systemdiagramms einer beispielhaften erfindungsgemäßen Vorrichtung 1 mit zwei Ventilatoren gezeigt, welche über einen Zigbee Standart in einem Netzwerk N miteinander vernetzt sind. Ferner ist eine Bluetooth Kommunikation vorgesehen. Die Aggregate und Komponenten sind allesamt mit einem Transceiver zur drahtlosen Kommunikation ausgestattet.

Erfindungsgemäß ist die Erfassungseinrichtung (10) ausgebildet, energieverbrauchsrelevante Änderungen zu erfassen und bestimmungsgemäße energieverbrauchsrelevante Systemeingriffe, wie die Beladung oder die Entnahme von zu kühlenden Produkten, das damit verbundene Öffnen/Schließen von Kühleinrichtungen oder schwankende Umgebungstemperaturen automatisch von energieverbrauchsrelevante Störungen, wie Undichtigkeiten, Defekte oder den Betrieb an einem ungünstigen Betriebspunkt zu unterscheiden. Erfindungsgemäß werden die von der Erfassungseinrichtung erfassten Daten/Informationen, mit welchen von extern behebbaren energieverbrauchsrelevante Betriebsstörungen detektiert werden, von der Steuerungseinrichtung (20) so in Steuersignale (S) für die Aggregate (A) gewandelt, dass die von extern zu behebenden energieverbrauchsrelevanten Betriebsstörungen aufgrund der Steuerungsbefehle behoben werden.

## Patentansprüche

1. Vorrichtung (1) zur Multifunktionsvernetzung von energieversorgten Aggregaten (A), ausgebildet zum energieeffizienten und fernüberwachbarem Betreiben von einzelnen oder in Gruppen in einem Netzwerk (N) zusammengefügten Aggregaten (A) oder ganzen Verbundanlagen von energieversorgten Aggregaten (A) mit
a) einer drahtlosen und/oder drahtgebundenen Erfassungseinrichtung (10) zum Erfassen von aktuellen und/oder zeitintervallbezogenen Energieverbrauchsdaten (Ei) und/oder Leistungsdaten (Pi) der im Netzwerk (N) eingebundenen energieversorgten Aggregaten (A), die ausgebildet ist, einen interaktiven, ein- oder bidirektionalen Datenaustausch mit einzelnen oder allen der energieversorgten Aggregaten (A) vorzunehmen;
b) einer Steuerungseinrichtung (20) zur Übermittlung von Steuer- und/oder Regelungssignalen, wobei die Steuerungseinrichtung (20) mit einem Datenverarbeitungsmodul (21) ausgebildet ist, welche aus den, von der Erfassungseinrichtung (10) erfassten Energieverbrauchsdaten (Ei) und/oder Leistungsdaten (Pi) entsprechende Steuersignale (S) generiert, zur Modifikation wenigstens eines energierelevanten Betriebszustandes wenigstens eines oder aller der energieversorgten Aggregaten (A) konfiguriert ist, so dass der Energieverbrauch des oder der energieversorgten Aggregaten (A) zu einem Zeitpunkt oder über ein definiertes Zeitintervall abnimmt;
c) der Erfassungseinrichtung (10), die ausgebildet ist, energieverbrauchsrelevante Änderungen zu erfassen und bestimmungsgemäße energieverbrauchsrelevante Systemeingriffe, wie die Beladung oder die Entnahme von zu kühlenden Produkten, das damit verbundene Öffnen/Schließen von Kühleinrichtungen oder schwankende Umgebungstemperaturen automatisch von energieverbrauchsrelevanten Störungen, wie Undichtigkeiten, Defekte oder den Betrieb an einem ungünstigen Betriebspunkt zu unterscheiden;
d) den von der Erfassungseinrichtung (10) erfassten Daten/Informationen, mit welchen von extern behebbare energieverbrauchsrelevante Betriebsstörungen detektiert werden, und diese Daten/Informationen von der Steuerungseinrichtung (20) so in Steuersignale (S) für die Aggregate (A) gewandelt werden, dass die von extern zu behebenden energieverbrauchsrelevanten Betriebsstörungen aufgrund der Steuerungsbefehle behoben werden.

2. Vorrichtung (1) zur Multifunktionsvernetzung gemäß Anspruch 1, **dadurch gekennzeichnet, dass** die energieversorgten Aggregate (A) entweder Kühlaggregate, Kühltheken, Kühlhäuser und/oder deren Einrichtungen darstellen, sowie lufttechnische Anlagen, Trockner, Kompressoranlagen und/oder deren Einrichtungen darstellen können.

3. Vorrichtung (1) zur Multifunktionsvernetzung gemäß Anspruch 1 oder 2, **dadurch gekennzeichnet, dass** die energieversorgten Aggregate (A) mit einer Zentralsteuerung (30) und/oder wenigstens einer lokalen Steuerung (31), vorzugsweise auch untereinander vernetzt sind.

4. Vorrichtung (1) zur Multifunktionsvernetzung gemäß einem der vorhergehenden Ansprüche, **dadurch gekennzeichnet, dass** die Vorrichtung ferner eine Anzeigevorrichtung (40) und/oder eine Eingabevorrichtung (50) zum manuellen oder automatisierten Eingeben oder Ein- und Auslesen von Parametern, vorzugsweise von betriebsbezogenen Parametern (Pb) und/oder energieverbrauchsbezogenen Parametern (Pm) aufweist.

5. Vorrichtung (1) zur Multifunktionsvernetzung gemäß einem der vorhergehenden Ansprüche, **dadurch gekennzeichnet, dass** die Erfassungseinrichtung ausgebildet ist, die aktuelle Kühllast sowie einen Energiebedarfsparameter entsprechend der gerade aktuell zu kühlenden Kühllast zu ermitteln und insbesondere eine detektierte Temperaturschwankung innerhalb von Kühleinrichtungen durch Datenvergleich mit hinterlegten Soll-Betriebsdaten dahingehend interpretieren kann, ob die Temperaturabweichung durch einen Beladungsvorgang mit einer zusätzlichen Kühllast oder einen energieineffizienten Betrieb oder eine Betriebsstörung verursacht wurde.

6. Vorrichtung (1) zur Multifunktionsvernetzung gemäß einem der vorhergehenden Ansprüche, **dadurch gekennzeichnet, dass** die Erfassungseinrichtung ausgebildet ist, Betriebszustände mit Energierelevanz, eine Soll/Ist-Temperatur, einen Motorparameter, einen Druckparameter, ein zu förderndes Luftstromvolumina oder andere Betriebsparameter, wie Beladungs- und, oder Belastungszustände durch den zu kühlenden Inhalt und deren Verpackungen zu erfassen.

7. Verfahren zur Multifunktionsvernetzung von energieversorgten Aggregaten (A) mit einer Vorrichtung (1) zur Multifinktionsvernetzung nach Anspruch 1, ausgebildet zum energieeffizienten und fernüberwachbarem Betreiben von einzelnen oder in Gruppen in einem Netzwerk (N) zusammengefügten Aggregaten (A) oder ganzen Verbundanlagen von energieversorgten Aggregaten (A), mit den folgenden Schritten:
a) drahtlose und/oder drahtgebundene Erfassung von aktuellen und/oder zeitintervallbezogenen Energieverbrauchsdaten (Ei) und/oder Leistungsdaten (Pi) der im Netzwerk (N) eingebundenen energieversorgten Aggregate (A) durch eine Erfassungseinrichtung (10);
b) Übergabe der erfassten Daten an eine Steuerungseinrichtung (20);
c) Übermittlung von Steuer- und/oder Regelungssignalen durch die Steuerungseinrichtung (20) an wenigstens eines der Aggregate (A), wobei die Steuerungseinrichtung (20) mit einem Datenverarbeitungsmodul (21) ausgebildet ist, welche aus den, von der Erfassungseinrichtung (10) erfassten Energieverbrauchsdaten (Ei) und/oder Leistungsdaten (Pi) entsprechende Steuersignale (S) generiert;
d) Modifikation wenigstens eines energierelevanten Betriebszustandes wenigstens eines oder aller der energieversorgten Aggregate (A), so dass der Energieverbrauch des oder der energieversorgten Aggregate (A) zu einem Zeitpunkt oder über ein definiertes Zeitintervall abnimmt, wobei
(e) die Erfassungseinrichtung (10) ausgebildet ist, energieverbrauchsrelevante Änderungen zu erfassen und bestimmungsgemäße energieverbrauchsrelevante Systemeingriffe, wie die Beladung oder die Entnahme von zu kühlenden Produkten, das damit verbundene Öffnen/Schließen von Kühleinrichtungen oder schwankende Umgebungstemperaturen automatisch von energieverbrauchsrelevante Störungen, wie Undichtigkeiten, Defekte oder den Betrieb an einem ungünstigen Betriebspunkt zu unterscheiden, wobei
(f) die von der die Erfassungseinrichtung erfassten Daten/Informationen, mit welchen von extern behebbaren energieverbrauchsrelevante Betriebsstörungen detektiert werden, von der Steuerungseinrichtung (20) so in Steuersignale (S) für die Aggregate (A) gewandelt werden, dass die von extern zu behebenden energieverbrauchsrelevanten Betriebsstörungen aufgrund der Steuerungsbefehle behoben werden.

## Claims

1. Apparatus (1) for the multifunctional networking of energy-supplied aggregates (A), formed for the energy-efficient and remote-monitorable operation of individual aggregates (A) or aggregates (A) combined in groups in a network (N) or entire compound installations of energy-supplied aggregates (A), having
a) a wireless and/or wire-bound detecting means (10) for detecting current and/or time-interval related energy consumption data (Ei) and/or power data (Pi) of the energy-supplied aggregates (A) integrated in the network (N), which is formed to perform an interactive, one- or bidirectional data exchange with individual or all of the energy-supplied aggregates (A);
b) a control device (20) for transmitting control and/or regulating signals, wherein the control device (20) is formed with a data processing module (21) which generates corresponding control signals (S) from the energy consumption data (Ei) and/or power data (Pi) detected by the detecting means (10), is configurated for modifying at least one energy-relevant operating state of at least one or all of the energy-supplied aggregates (A) so that the energy consumption of the energy-supplied aggregate(s) (A) decreases at a point in time or over a defined time interval;
c) the detecting means (10), which is formed for detecting energy consumption-relevant changes and automatically distinguishing energy consumption-relevant system interventions, such as the loading or removal of products to be cooled, the related opening/closing of cooling devices or fluctuating ambient temperatures from energy consumption-relevant disturbances, such as leaks, defects or operation at an unfavourable operating point;
d) the data/information detected by the detecting means (10), with which externally rectifiable energy consumption-relevant operating faults are detected, and this data/information is converted by the control device (20) into control signals (S) for the aggregates (A) in such a way that the energy consumption-relevant operating faults to be remedied externally are remedied on the basis of the control commands.

2. Apparatus (1) for multifunctional networking according to claim 1, **characterized in that** the energy-supplied aggregates (A) can be either refrigeration aggregates, refrigerated counters, cold stores and/or their equipment, as well as ventilation systems, dryers, compressor systems and/or their equipment.

3. Apparatus (1) for multifunctional networking according to claim 1 or 2, **characterized in that** the power-supplied aggregates (A) are linked to a central control unit (30) and/or at least one local control unit (31), preferably also linked to one another.

4. Apparatus (1) for multifunctional networking according to one of the preceding claims, **characterized in that** the apparatus further comprises a display device (40) and/or an input device (50) for manual or automated input or read-in and read-out of parameters, preferably operation-related parameters (Pb) and/or energy consumption-related parameters (Pm).

5. Apparatus (1) for multifunctional networking according to one of the preceding claims, **characterized in that** the detecting means is formed to detect the current cooling load as well as an energy requirement parameter corresponding to the currently current cooling load to be cooled and in particular is capable of interpreting a detected temperature fluctuation within cooling devices by data comparison with stored target operating data whether the temperature deviation has been caused by a loading process with an additional cooling load or an energy-inefficient operation or an operating fault.

6. Apparatus (1) for multifunctional networking according to one of the preceding claims, **characterized in that** the detecting means is formed to detect operating conditions with energy relevance, a target/actual-temperature, a motor parameter, a pressure parameter, an air flow volume to be conveyed or other operating parameters, such as loading and/or load conditions caused by the contents to be cooled and their packaging.

7. Method for multifunctional networking of power-supplied aggregates (A) with an apparatus (1) for multifunctional networking according to claim 1, formed for the energy-efficient and remote-monitorable operation of individual aggregates (A) or aggregates (A) combined in groups in a network (N) or entire compound installations of power-supplied aggregates (A), comprising the following steps:
a) wireless and/or wire-bound detection of current and/or time-interval related energy consumption data (Ei) and/or power data (Pi) of the energy-supplied aggregates (A) integrated in the network (N) by a detecting means (10);
b) transfer of the recorded data to a control device (20);
c) transmission of control and/or regulation signals by the control device (20) to at least one of the aggregates (A), wherein the control device (20) is formed with a data processing module (21) which generates corresponding control signals (S) from the energy consumption data (Ei) and/or performance data (Pi) detected by the detecting means (10);
d) modification of at least one energy-relevant operating state of at least one or all of the energy-supplied aggregates (A) so that the energy consumption of the energy-supplied aggregate(s) (A) decreases at a time or over a defined time interval, wherein
e) the detecting means (10) is formed to detect energy consumption-relevant changes and automatically distinguishing energy consumption-relevant system interventions, such as the loading or removal of products to be cooled, the related opening/closing of cooling devices or fluctuating ambient temperatures from energy consumption-relevant disturbances, such as leaks, defects or operation at an unfavourable operating point, wherein
f) the data/information detected by the detecting means (10), with which externally rectifiable energy consumption-relevant operating faults are detected, is converted by the control device (20) into control signals (S) for the aggregates (A) in such a way that the energy consumption-relevant operating faults to be remedied externally are remedied on the basis of the control commands.

## Revendications

1. Dispositif (1) pour réseautage à plusieurs usages d'unités (A) alimentées en énergie, réalisé pour le fonctionnement efficace du point de vue énergétique et pouvant être surveillé à distance d'unités (A) individuelles ou assemblées en groupes dans un réseau (N) ou d'installations combinées entières d'unités (A) alimentées en énergie avec
a) un dispositif de détection (10) sans fil et/ou filaire pour la détection de données de consommation d'énergie (Ei) et/ou données de puissance (Pi) actuelles et/ou relatives à un intervalle de temps des unités (A) alimentées en énergie intégrées dans le réseau (N), qui est réalisé pour procéder à un échange de données interactif, unidirectionnel ou bidirectionnel avec des unités (A) alimentées en énergie individuelles ou toutes les unités alimentées en énergie ;
b) un dispositif de commande (20) pour la transmission de signaux de commande et/ou de régulation, dans lequel le dispositif de commande (20) est réalisé avec un module de traitement de données (21), lequel génère à partir des données de consommation d'énergie (Ei) et/ou données de puissance (Pi) détectées par le dispositif de détection (10) des signaux de commande (S) correspondants, est configuré pour la modification d'au moins un état de fonctionnement important du point de vue énergétique d'au moins une ou de toutes les unités (A) alimentées en énergie de sorte que la consommation d'énergie de la ou des unités (A) alimentées en énergie diminue à un moment ou sur un intervalle de temps défini ;
c) le dispositif de détection (10), qui est réalisé pour détecter des changements importants du point de vue de la consommation d'énergie et faire automatiquement la distinction entre des interventions sur le système conformes à sa destination importantes du point de vue de la consommation d'énergie, comme le chargement ou le retrait de produits à refroidir, l'ouverture/fermeture qui y est associée de dispositifs de refroidissement ou l'oscillation de températures ambiantes et des dérangements importants du point de vue de la consommation d'énergie, tels que des défauts d'étanchéité, des défauts ou le fonctionnement à un point de fonctionnement défavorable ;
d) les données/informations détectées par le dispositif de détection (10), avec lesquelles des dysfonctionnements importants du point de vue de la consommation d'énergie pouvant être éliminés en externe sont détectés, et ces données/informations sont converties par le dispositif de commande (20) en signaux de commande (S) pour les unités (A) de sorte que les dysfonctionnements importants du point de vue de la consommation d'énergie à éliminer en externe sont éliminés en raison des ordres de commande.

2. Dispositif (1) pour réseautage à plusieurs usages selon la revendication 1, **caractérisé en ce que** les unités (A) alimentées en énergie représentent soit des unités de refroidissement, des vitrines réfrigérées, des chambres froides et/ou leurs équipements, et peuvent représenter des installations aérauliques, sécheurs, installations de compresseurs et/ou leurs équipements.

3. Dispositif (1) pour réseautage à plusieurs usages selon la revendication 1 ou 2, **caractérisé en ce que** les unités (A) alimentées en énergie sont mises en réseau avec une commande centrale (30) et/ou au moins une commande locale (31), de préférence aussi entre elles.

4. Dispositif (1) pour réseautage à plusieurs usages selon l'une quelconque des revendications précédentes, **caractérisé en ce que** le dispositif présente en outre un dispositif d'affichage (40) et/ou un dispositif de saisie (50) pour la saisie ou écriture et lecture manuelle ou automatisée de paramètres, de préférence de paramètres relatifs au fonctionnement (Pb) et/ou de paramètres relatifs à la consommation d'énergie (Pm).

5. Dispositif (1) pour réseautage à plusieurs usages selon l'une quelconque des revendications précédentes, **caractérisé en ce que** le dispositif de détection est réalisé pour déterminer la charge de refroidissement actuelle ainsi qu'un paramètre de besoin en énergie conformément à la charge de refroidissement actuellement à refroidir et peut interpréter en particulier une oscillation de température détectée à l'intérieur de dispositifs de refroidissement par comparaison de données avec des données de fonctionnement de consigne enregistrées pour déterminer si l'écart de température a été provoqué par une opération de chargement avec une charge de refroidissement supplémentaire ou un fonctionnement inefficace du point de vue énergétique ou un disfonctionnement.

6. Dispositif (1) pour réseautage à plusieurs usages selon l'une quelconque des revendications précédentes, **caractérisé en ce que** le dispositif de détection est réalisé pour détecter des états de fonctionnement avec importance énergétique, une température de consigne/réelle, un paramètre de moteur, un paramètre de pression, un volume de flux d'air à transporter ou d'autres paramètres de fonctionnement, tels que des états de chargement, ou des états de sollicitation par le contenu à refroidir et leur emballage.

7. Procédé pour réseautage à plusieurs usages d'unités (A) alimentées en énergie avec un dispositif (1) pour réseautage à plusieurs usages selon la revendication 1, réalisé pour le fonctionnement efficace du point de vue énergétique et pouvant être surveillé à distance d'unités (A) individuelles ou assemblées en groupes dans un réseau (N) ou d'installations combinées entières d'unités (A) alimentées en énergie avec les étapes suivantes :
a) détection sans fil et/ou filaire de données de consommation d'énergie (Ei) et/ou données de puissance (Pi) actuelles et/ou relatives à un intervalle de temps des unités (A) alimentées en énergie intégrées dans le réseau (N) par un dispositif de détection (10) ;
b) transfert des données détectées à un dispositif de commande (20) ;
c) transmission de signaux de commande et/ou de régulation par le dispositif de commande (20) à au moins une des unités (A), dans lequel le dispositif de commande (20) est réalisé avec un module de traitement de données (21), lequel génère à partir des données de consommation d'énergie (Ei) et/ou données de puissance (Pi) détectées par le dispositif de détection (10) des signaux de commande (S) correspondants ;
d) modification d'au moins un état de fonctionnement important du point de vue énergétique d'au moins une ou de toutes les unités (A) alimentées en énergie de sorte que la consommation d'énergie de la ou des unités (A) alimentées en énergie diminue à un moment ou sur un intervalle de temps défini, dans lequel
e) le dispositif de détection (10) est réalisé pour détecter des changements importants du point de vue de la consommation d'énergie et faire automatiquement la distinction entre des interventions sur le système conformes à sa destination importantes du point de vue de la consommation d'énergie, comme le chargement ou le retrait de produits à refroidir, l'ouverture/fermeture qui y est associée de dispositifs de refroidissement ou l'oscillation de températures ambiantes et des dérangements importants du point de vue de la consommation d'énergie, tels que des défauts d'étanchéité, des défauts ou le fonctionnement à un point de fonctionnement défavorable, dans lequel
f) les données/informations détectées par le dispositif de détection, avec lesquelles des dysfonctionnements importants du point de vue de la consommation d'énergie pouvant être éliminés en externe sont détectés, sont converties par le dispositif de commande (20) en signaux de commande (S) pour les unités (A) de sorte que les dysfonctionnements importants du point de vue de la consommation d'énergie à éliminer en externe sont éliminés en raison des ordres de commande.
